# EUROPEAN PATENT APPLICATION

(11) **EP 4 776 017 A1**
(43) Date of publication of application: **15.07.2026**
(21) Application number: 25215490.1
(22) Date of filing: 13.11.2025
(51) Int. Cl.: G01S 7/02, G01S 13/87, G01S 13/931

(54) **RADAR SENSOR DEVICE AND CONTROL METHOD THEREFOR**

(30) Priority: 10.01.2025 KR 20250003919
(71) Applicant: Hyundai Mobis Co., Ltd., Gangnam-gu Seoul 06141 (KR)
(72) Inventor: BAE, Seung Ju, 16891 Yongin-si, Gyeonggi-do (KR); KIM, Sang Hyung, 16891 Yongin-si, Gyeonggi-do (KR); KIM, Seok, 16891 Yongin-si, Gyeonggi-do (KR)
(74) Representative: Jung, Minkyu

(57) **Abstract**

According to an embodiment of the present disclosure, a master sensor configured to control radar wave transmission is provided. The master sensor includes: a controller configured to generate a control signal for a radio wave transmission start based on radio wave transmission timings of radar sensors of each sensor and process reflected waves corresponding to transmitted radio waves; and a transceiver configured to transmit the generated control signal to other sensors. The controller is configured to transmit the control signal to at least one sensor of a first group and at least one sensor of a second group at different timings.

## Description

This application claims the benefit of Korean Patent Application No. 10-2025-0003919, filed on January 10, 2025, which is hereby incorporated by reference as if fully set forth herein.

### BACKGROUND

### Technical Field

The present disclosure relates to a radar sensor device and a control method therefor, and more particularly, to a radar sensor device configured to control the transmission timing of a radar, a control method therefor, and a radar sensor system including a plurality of radar sensor devices.

### Discussion of the Related Art

As the advanced driving assistant system (ADAS) becomes more advanced, an increasing number of sensors are mounted on vehicles. In the case of radar systems, a vehicle may be equipped with four corner radar sensors and one front radar sensor. In addition, 6-radar sensor systems, 8-radar sensor systems, and so on are also being discussed.

As the number of sensors increases, interference between radar signals becomes more severe, and currently, the following technologies are used to address this issue.

Interference avoidance: a technology that avoids interference based on interference conditions before interference occurs between radar signal waveforms.
- Frequency hopping: a technology that divides the frequency band of a radio wave capable of being used by the radar into multiple regions, measures the degree of signal interference in each cycle, and relocates the frequency region of a sensor determined to experience interference.

Interference cancellation: a technology that removes signal regions estimated to be interference through signal processing after interference occurs.
- Nulling: a technology that measures the level of an entire signal, configures a certain threshold, determines signals exceeding the threshold as interference, and processes the signals as zero.

However, in the case of frequency hopping, there is a disadvantage in that the entirety of a given band is incapable of being fully used because a limited frequency band is divided into multiple regions. In addition, as the resolution of the radar increases and the maximum/minimum detection range increases, a wide frequency band should be used, which may reduce scalability.

The nulling technology may minimize interference between heterogeneous radars with partially overlapping waveforms, but the nulling technology has a weakness in dealing with interference signals between homogeneous radars with the same waveform and frequency band.

Accordingly, a technology capable of preventing or reducing radio wave interference between neighboring radar sensors will be described in the present disclosure.

### SUMMARY

Accordingly, the present disclosure is directed to a radar sensor and control method therefor that substantially obviate one or more problems due to limitations and disadvantages of the related art.

The present disclosure aims to provide a radar sensor, a control method therefor, and a radar sensor system.

The present disclosure aims to provide a radar sensor capable of controlling the transmission timing of radio waves for each radar sensor, a control method therefor, and a radar sensor system.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, provided is a master sensor configured to control radar wave transmission. The master sensor includes: a controller configured to generate a control signal for a radio wave transmission start based on radio wave transmission timings of radar sensors of each sensor and process reflected radio waves corresponding to transmitted radio waves; and a transceiver configured to transmit the control signal to other sensors. The controller is configured to transmit the control signal to at least one sensor of a first group and at least one sensor of a second group at different timings.

Additionally or alternatively, the controller may be configured to: transmit the control signal to the at least one sensor of the first group upon an initiation of a timer; and transmit the control signal to the at least one sensor of the second group based on an expiration of the timer.

Additionally or alternatively, based on that an operation period for the master sensor ends, the controller may be configured to initiate the expired timer and transmit the control signal to the at least one sensor of the first group.

Additionally or alternatively, even based on that a radar sensor of the master sensor has transmitted a radio wave and processing of a reflected radio wave corresponding to the transmitted radio wave has been completed before the operation period ends, the controller may be configured not to initiate the expired timer or transmit the control signal to the at least one sensor of the first group.

Additionally or alternatively, the operation period may be configured to have a length obtained by adding a predefined margin time to an expected time required for the transmission of the radio wave by the radar sensor of the master sensor and the processing of a reflected radio wave corresponding to the transmitted radio wave.

Additionally or alternatively, the control signal may be configured to instruct the at least one sensor of the first group or the at least one sensor of the second group to transmit radio waves through radar sensors and process reflected radio waves corresponding to the transmitted radio waves.

Additionally or alternatively, fields of view (FOVs) of radio waves transmitted by the at least one sensor of the first group may be configured not to overlap with each another, and FOVs of radio waves transmitted by the at least one sensor of the second group may be configured not to overlap with each other.

In another aspect of the present disclosure, provided herein is a slave sensor configured to control radar wave transmission. The slave sensor includes: a controller configured to control transmission of a radio wave by a radar sensor based on a radio wave transmission start control signal received from a master sensor and process a reflected radio wave corresponding to the transmitted radio wave, wherein the control signal is transmitted and received based on a radio wave transmission timing of the radar sensor; and a transceiver configured to receive the radio wave transmission start control signal. The controller is configured to control the slave sensor to remain in a standby mode until the control signal is received.

Additionally or alternatively, based on that the control signal is received from the master sensor while processing of a reflected radio wave corresponding to a previously transmitted radio wave is not completed, the controller may be configured to restrict the transmission of the radio wave by the radar sensor.

Additionally or alternatively, based on that the transmission of the radio wave by the radar sensor does not start within a predefined time after the control signal is received, the controller may be configured to skip the transmission of the radio wave corresponding to the received control signal.

In a further aspect of the present disclosure, provided herein is a radar sensor system configured to perform radar wave transmission based on time-division multiplexing. The radar sensor system includes: a master sensor; at least one sensor of a first group; and at least one sensor of a second group. The master sensor may be configured to generate a radio wave transmission start control signal based on radio wave transmission timings of radar sensors of each of the sensors and transmit the control signal to the at least one sensor of the first group or the at least one sensor of the second group. The master sensor may be configured to transmit the control signal to the at least one sensor of the first group and the at least one sensor of the second group at different timings. The master sensor may be configured to start transmitting radio waves simultaneously with the transmission of the control signal. The at least one sensor of the first group and the at least one sensor of the second group may be configured to start transmitting radio waves upon receiving the control signal.

The above-described solutions of the present disclosure are part of the embodiments of the present disclosure. Various solutions other than the above-described solutions may be derived and understood based on the detailed description of the present disclosure provided below.

The present disclosure has the following effects.

The present disclosure may prevent malfunction by avoiding interference between radar waves, that is, reduce false alarms caused by false detection due to inter-wave interference.

In addition, the present disclosure may achieve synchronization between radar sensors without requiring a separate structure for radar sensor synchronization.

The effects according to the present disclosure are not limited to what has been particularly described hereinabove, and any other effects not mentioned may be clearly understood by those skilled in the art to which the present disclosure pertains from the following detailed description.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is an overall block diagram of an autonomous vehicle to which an autonomous driving device is applicable;
FIG. 2 is an exemplary diagram illustrating an example in which an autonomous driving device is applied to a vehicle;
FIG. 3 illustrates a waveform of a transmitted wave at a first time point according to the present disclosure;
FIG. 4 illustrates a waveform of a transmitted wave at a second time point according to the present disclosure;
FIG. 5 illustrates a timing diagram of radio wave transmission and radar signal processing for each radar sensor device according to the present disclosure;
FIG. 6 illustrates a block diagram for timing control of radio wave transmission according to the present disclosure;
FIG. 7 illustrates a detailed block diagram for timing control of radio wave transmission according to the present disclosure;
FIG. 8 illustrates a radar sensor installed in a vehicle or moving object and an overview of the waveform of the transmitted wave therefrom according to another embodiment of the present disclosure;
FIG. 9 illustrates a flowchart of a method for controlling a radio wave transmission timing at a master sensor according to the present disclosure;
FIG. 10 illustrates a flowchart of a method for controlling a radio wave transmission timing at a slave sensor according to the present disclosure; and
FIG. 11 illustrates a block diagram of a radio wave transmission device according to the present disclosure.

### DETAILED DESCRIPTION

The embodiments of the present invention will now be described below with reference to the accompanying drawings.

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "occupant", "passenger", "driver", "user", etc. are mentioned for description of the present disclosure, and may be used interchangeably therewith.

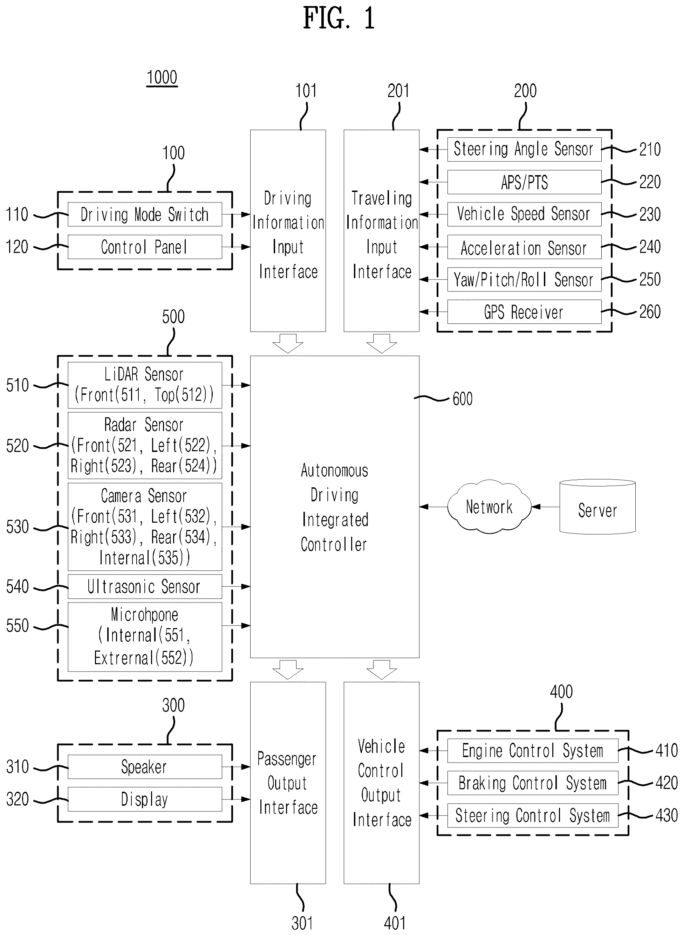

FIG. 1 is an overall block diagram of an autonomous driving control system to which an autonomous driving apparatus according to any one of embodiments of the present disclosure is applicable.

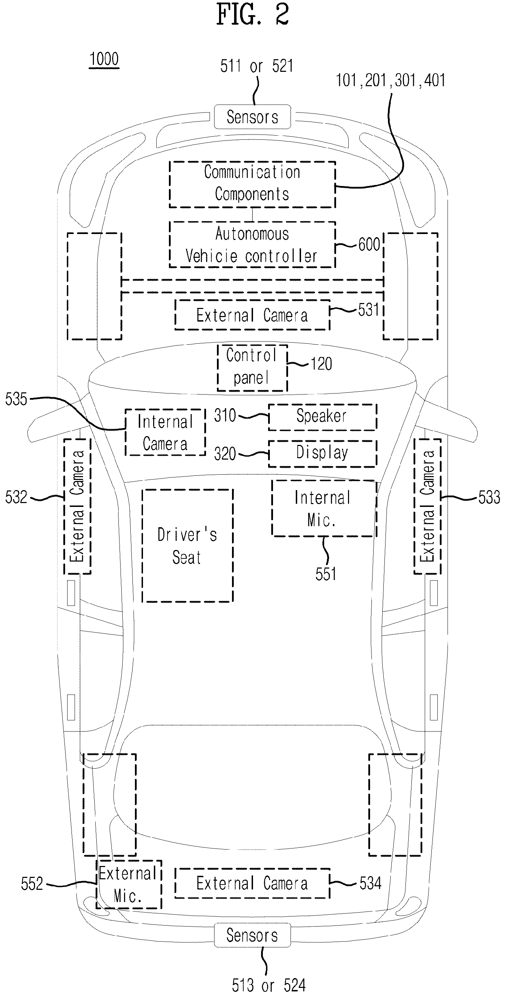

FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

Hereinafter, the timing control of radar wave transmission according to the present disclosure, a control signal for supporting the same, signal transmission, and transfer structure will be described. The present disclosure may be applied not only to vehicles but also to various moving objects such as robots and unmanned aerial vehicles.

Hereinafter, the term sensor device refers to a device that transmits radio waves, detects radio waves reflected from an object (or obstacle) within the field of view (FOV) of the radio waves, and senses the detection, identification, or distance to the object (or obstacle).
In some cases, the sensor device may also be referred to as a radar sensor device or a radar sensor.

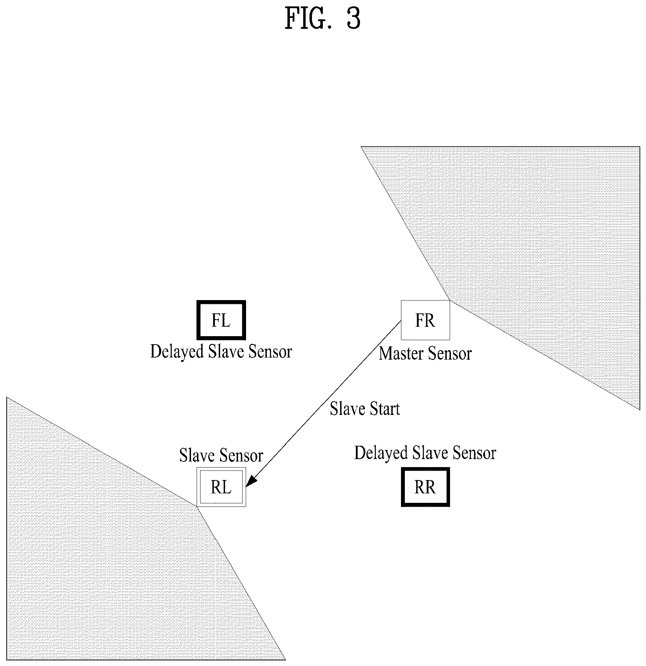

FIG. 3 illustrates the waveform of a transmitted radio wave at a first time point according to the present disclosure. As shown in FIG. 3, a radar sensor system according to the present disclosure includes a plurality of sensor devices.

A master sensor device controls each sensor device. In some embodiments, the master sensor device may be referred to as a master sensor. In some embodiments, the sensor device may be referred to as a sensor. The master sensor device may also be configured to transmit radio waves and process the corresponding reflected radio waves. The master sensor device may be configured to transmit a control signal through the network to slave sensor devices to instruct the slave sensor devices to transmit radio waves and process the corresponding reflected radio waves. Preferably, one master sensor device may be configured in the radar sensor system, and the master sensor device is selected as a sensor device with the longest processing time that performs not only object detection but also object tracking.

The slave sensor device remains in a standby mode until the slave sensor device receives a control signal from the master sensor device. In some embodiments, the salve sensor device may be referred to as a slave sensor. Upon receiving the control signal, the slave sensor device is configured to transmit radio waves and process the corresponding reflected radio waves. The slave sensor device is configured to transmit radio waves simultaneously with the master sensor and is selected as a sensor device that transmits a radio wave of which FOV does not overlap with the FOV of a radio wave transmitted from the master sensor device.

A delayed slave sensor device remains in the standby mode until the delayed slave sensor device receives a control signal from the master sensor device. Upon receiving the control signal, the delayed slave sensor device is configured to perform transmission of radio waves and processing of the corresponding reflected radio waves. The delayed slave sensor device is configured to start transmitting radio waves after the master sensor device completes the transmission of radio waves. The delayed slave sensor device is selected as a sensor device that transmits a radio wave of which FOV overlaps with the FOV of a radio wave transmitted from the master sensor device.

In this specification, sensor devices of which FOVs of transmitted waves do not overlap with each other are set as the same group. In FIGS. 3 to 4, the master sensor device and the slave sensor device RL may form one group, and the delayed slave sensor devices FL and RR may form another group.

In this specification, "FR" refers to front-right, which means the front right side of a vehicle or moving object, and accordingly, the master sensor device is installed on the front right side. "RL" refers to rear-left, which means the rear left side of a vehicle or moving object, and accordingly, the slave sensor device is installed on the rear left side. "FL" refers to front-left, which means the front left side of a vehicle or moving object, and accordingly, the delayed slave sensor device FL is installed on the front left side. "RR" refers to rear-right, which means the rear right side of a vehicle or moving object, and accordingly, the slave sensor device RR is installed on the rear right side.

As described above, the present disclosure is intended to control the transmission timing of radar sensors, and the transmission start time of radio waves may be configured for each group.

FIG. 3 shows that the master sensor device and the slave sensor device transmit radio waves simultaneously. The FOV of a radio wave transmitted by the master sensor device and the FOV of a radio wave transmitted by the slave sensor device do not overlap. The master sensor device may transmit a control signal ("Slave Start") to the slave sensor device to control the slave sensor device to initiate a radar signal transmission and signal processing process (hereinafter referred to as a "radar signal process"), such as transmitting radio waves and processing the corresponding reflected radio waves. That is, the master sensor device and the slave sensor device form a first group, and the sensor devices of the first group may start transmitting radio waves simultaneously. However, "simultaneously" may not necessarily mean a perfectly synchronized time point. The transmission of radio waves by the master sensor device and the slave sensor device may start within a certain range of timing error.

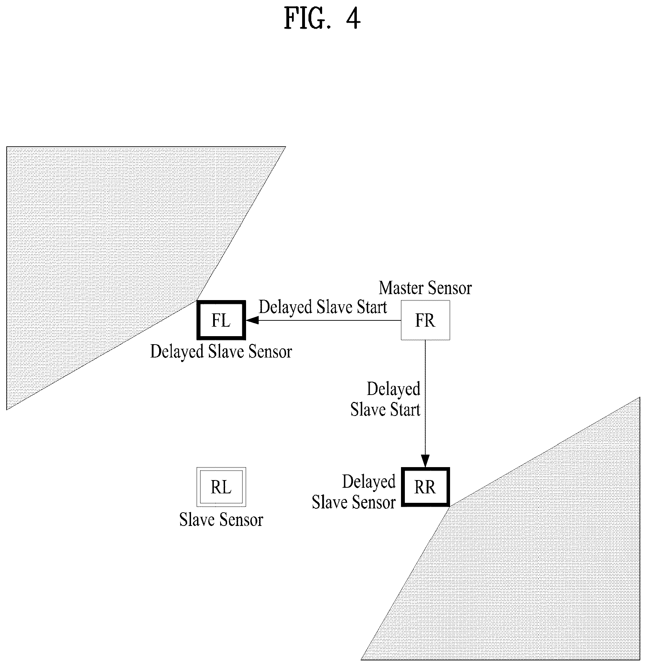

FIG. 4 illustrates the waveform of a radio wave transmitted at a second time point according to the present disclosure.

Referring to FIG. 4, it is shown that a delayed slave sensor device FL and a delayed slave sensor device RR transmit radio waves simultaneously.

The FOV of a radio wave transmitted by the delayed slave sensor device FL and the FOV of a radio wave transmitted by the delayed slave sensor device RR do not overlap. A master sensor device may transmit a control signal ("Delayed Slave Start") to the delayed slave sensor device FL to control the delayed slave sensor device FL to initiate the "radar signal process." In addition, at the same time, the master sensor device may transmit a control signal ("Delayed Slave Start") to the delayed slave sensor device RR to control the delayed slave sensor device RR to initiate the "radar signal process."

That is, the delayed slave sensor device FL and the delayed slave sensor device RR form a second group, and the radar sensor devices of the second group may start transmitting radio waves simultaneously. However, "simultaneously" may not necessarily mean a perfectly synchronized time point. The transmission of radio waves by the delayed slave sensor device FL and the delayed slave sensor device RR may start within a certain range of timing error.

FIGS. 3 and 4 show embodiments including four radar sensor devices, but the present disclosure is not limited to the number or arrangement of radar sensor devices.

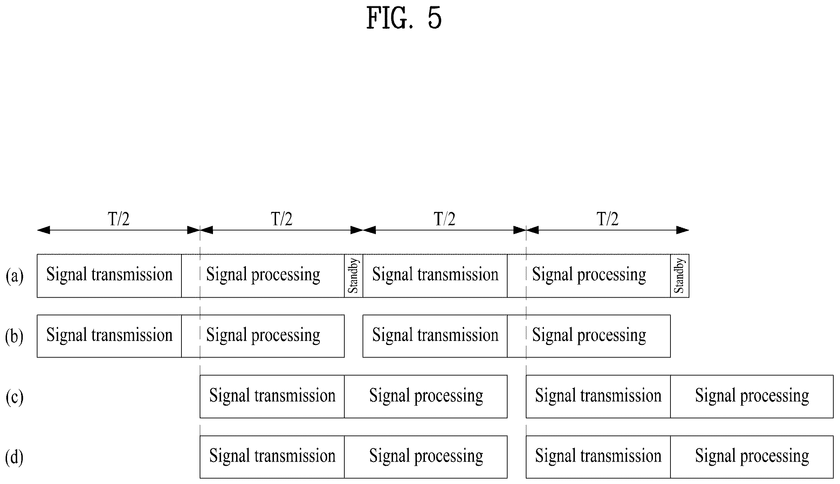

FIG. 5 illustrates a timing diagram of radio wave transmission and radar signal processing for each radar sensor device according to the present disclosure.

In the previous description, it is stated that a master sensor device transmits control signals to each sensor device to control each sensor device to initiate the "radar signal process."

The timing control of radio wave transmission in the present disclosure is preferably performed such that the FOVs do not overlap with each other.

FIGS. 5(a), (b), (c), and (d) respectively illustrate timing diagrams of the "radar signal process" of a master sensor device, a slave sensor device RL, a delayed slave sensor device FL, and a delayed slave sensor device RR.

The timing control of the "radar signal process" is performed by the master sensor device, and the timing diagrams shown in FIG. 5 will be described from the perspective of the master sensor device.

The master sensor device may be configured to receive or directly configure an operation period T for the master sensor device. The master sensor device may know the time point at which the operation period T starts or may be configured with the time point.

The master sensor device may transmit a control signal to the slave sensor device RL and simultaneously start radio wave transmission based on the start of the operation period T. The transmission of the control signal to the slave sensor device RL may be performed, for example, through CAN communication. The slave sensor device RL may receive the control signal and initiate the "radar signal process" accordingly. In other words, the slave sensor device RL may start transmitting radio waves. Referring to FIGS. 5(a) and (b), it is shown that the "signal transmission" of the master sensor device and the slave sensor device RL starts simultaneously. However, as mentioned above, "simultaneously" may not necessarily mean a perfectly synchronized time point.

The master sensor device and the slave sensor device RL complete the transmission of radio waves and then perform signal processing for the corresponding reflected radio waves. The master sensor device may be configured to transmit a control signal to the delayed slave sensor devices FL and RR at the midpoint of the operation period T. The transmission of the control signal to the delayed slave sensor devices FL and RR may be performed, for example, through CAN communication. The delayed slave sensor devices FL and RR may receive the control signal and initiate the "radar signal process" accordingly. In other words, the delayed slave sensor devices FL and RR may start transmitting radio waves. Referring to FIGS. 5(c) and (d), it is shown that the "signal transmission" of the delayed slave sensor devices FL and RR starts simultaneously. However, as mentioned above, "simultaneously" may not necessarily mean a perfectly synchronized time point.

The master sensor device may be configured to remain in the standby mode without performing additional radio wave transmission or transmitting control signals to the slave sensor device RL before the end of the operation period T. In contrast, all slave sensor devices RL, FL, and RR are not aware of the operation period T. The slave sensor device simply initiates the "radar signal process" in response to receiving the control signal from the master sensor device. Accordingly, only the master sensor device is aware of the timing for controlling the "radar signal process" according to the present disclosure. That is, the master sensor device may control not only its own operation but also the operation of other sensor devices based on the timing.

In addition, depending on the number of surrounding objects, the "radar signal process" of the slave sensor device may be delayed. The present disclosure does not provide a means for handling or feeding back such delays. This is because the present disclosure aims to reduce wasted resources and minimize delays in the "radar signal process."

However, the master sensor device may fail to complete one cycle of the "radar signal process" within the operation period T. In this case, no additional control signal is transmitted, and accordingly, any new "radar signal process" for all sensors is not initiated. Once the "radar signal process" is completed, the master sensor device remains in the standby mode. When the start/end time point of the operation period T is reached, the master sensor device may perform control to start the "radar signal process" again.

The slave sensor devices RL, FL, and RR may also fail to complete one cycle of the "radar signal process." However, the slave sensor devices may not be aware of the "cycle" or operation cycle. In such a state, a new control signal may be transmitted to the slave sensor device, but since the "radar signal process" of the slave sensor device is not completed, the slave sensor device does not start radio wave transmission in response to the control signal.

That is, such delays in the "radar signal process" of each sensor device may occur, and as a result, errors such as unexpected misalignment or overlapping of radio wave transmission from each sensor device may occur.

To address this, the slave sensor device may be configured to report the status thereof to the master sensor device. However, such a report causes additional resource consumption. In addition, since the master sensor device needs to pause the process until the master sensor device receives the status report from the slave sensor device, it may lead to further delays in the overall radar signal process.

Nevertheless, the master sensor device may operate according to the start/end time point of the operation period. Once the "radar signal process" is completed, the master sensor device remains in the standby mode during the idle time. Thus, the master sensor device may wait for the delay of the "radar signal process" of the slave sensor device. In other words, as the operation or control based on the operation period of the master sensor device is repeated, the delayed "radar signal process" of the slave sensor device is completed, and eventually, the operation timing of the master sensor device and the slave sensor device corresponding to a first operation period (T/2 * 2) shown in FIG. 5 may be restored. Simulation results confirmed that when the master sensor device performs the operation or control for a maximum of two to three cycles (operation periods), the operation timing of the master sensor device and the slave sensor devices is restored, that is, synchronized.

FIG. 5 illustrates the timing of the "radar signal process" under an ideal condition where no delay occurs in the "radar signal process." Basically, the process shown in FIG. 5 may be controlled to be repeated.

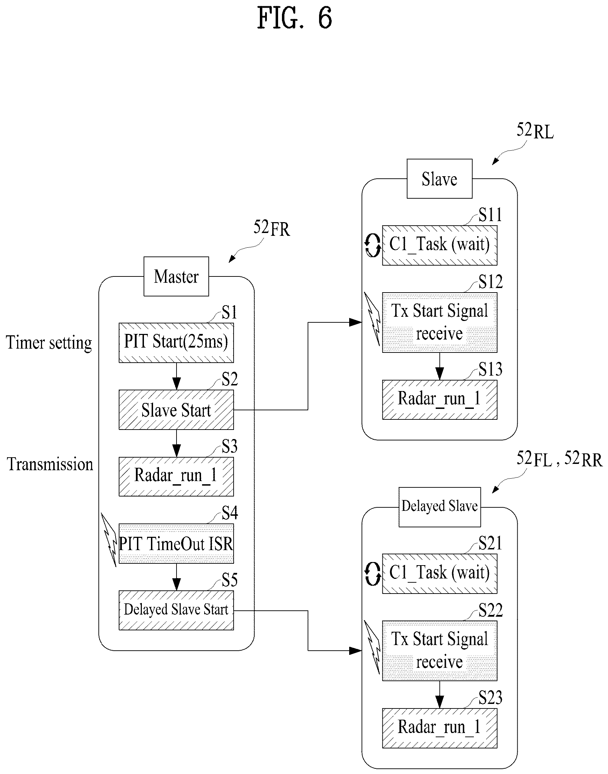

FIG. 6 illustrates a block diagram for timing control of radio wave transmission according to the present disclosure.

A master sensor 52_{FR} may be configured to initiate a configured periodic interval timer (PIT) (S1).

When the PIT is initiated, the master sensor 52_{FR} may be configured to transmit a control signal (Slave Start) to a slave sensor 52_{RL} (S2). Accordingly, the slave sensor 52_{RL} may receive the control signal (S12) and initiate and perform the "radar signal process" (S13).

Simultaneously with the transmission of the control signal, the master sensor 52_{FR} may initiate and perform the "radar signal process" for the master sensor 52_{FR} (S3).

While the "radar signal process" is in progress, the master sensor 52_{FR} may detect that the PIT expires (S4). Accordingly, the master sensor 52_{FR} may be configured to transmit a control signal (Delayed Slave Start) to delayed slave sensors 52_{FL} and 52_{RR} (S5).

Accordingly, the delayed slave sensors 52_{FL} and 52_{RR} may receive the control signal (S22) and initiate and perform the "radar signal process" (S23).

The slave sensor or the delayed slave sensor remains in the standby mode (S11 and S21) and does not perform any operation until the control signal (Slave Start or Delayed Slave Start) is received.

FIG. 6 shows that the PIT is set to 25 ms, but this is merely an example.

According to the content of FIG. 6, a first group including the master sensor 52_{FR} and a second group including the delayed slave sensors 52_{FL} and 52_{RR} may perform radio wave transmission with at least a 25 ms time difference.

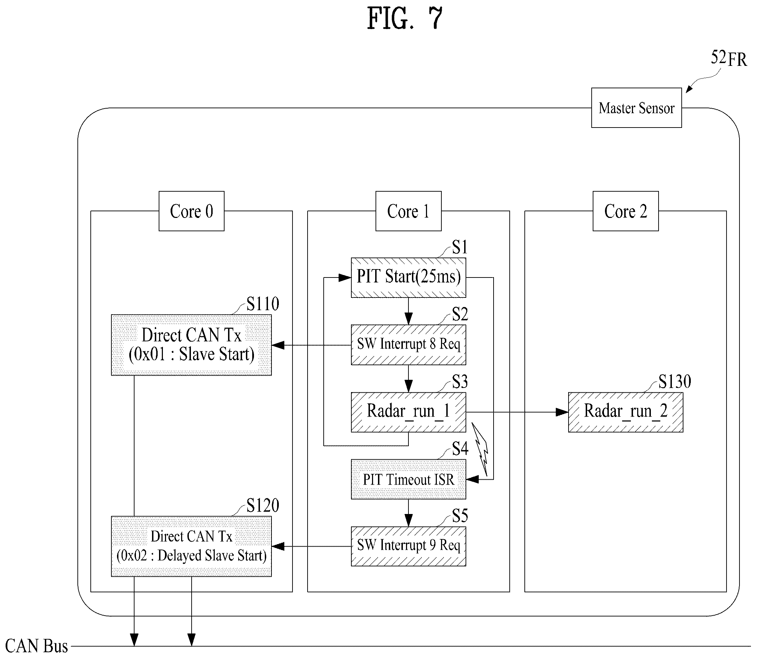

FIG. 7 illustrates a detailed block diagram for timing control of radio wave transmission according to the present disclosure.

FIG. 7 illustrates the master sensor 52_{FR} in more detail.

When an interrupt service routine (ISR) corresponding to Tx request #1 is received, the master sensor 52_{FR} may transmit a control signal (Slave Start) via CAN communication.
When an interrupt service routine (ISR) corresponding to Tx request #2 is received, the master sensor 52_{FR} may be configured to transmit a control signal (Delayed Slave Start) via CAN communication.

When the "radar signal process" is started, the "radar signal process" serves as a trigger for object tracking, and a "tracking process" is initiated.
The "tracking process" is a procedure performed only by the master sensor. The master sensor may fuse not only sensing results thereof but also sensing results from other sensors to perform object tracking.

Meanwhile, the master sensor, the slave sensor, or the delayed slave sensor may be reset. However, a reset of the master sensor may lead to a reset of all sensors.

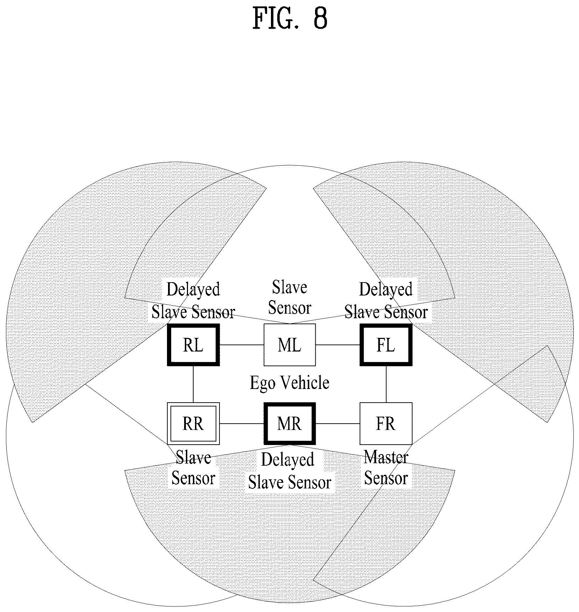

FIG. 8 illustrates a radar sensor installed in a vehicle or moving object and an overview of the waveform of a radio wave transmitted from the radar sensor, according to another embodiment of the present disclosure.

FIG. 8 shows a vehicle or moving object equipped with six radar sensors and the FOV of a radio wave transmitted by each radar sensor.

When sensors FR, ML, and RR are set as one group and the remaining sensors FL, MR, RL are set as another group, if the control is based on the timing of radio wave transmission or the timing of the "radar signal process" described above, the FOVs of each group may be controlled such that the FOVs do not overlap with each other.

Controlling the transmission timing per group may be understood as a type of time-division system. Although not illustrated, a frequency-division system, in which the frequencies of radio waves transmitted by sensors are varied, may additionally be applied to the time-division system according to the present disclosure. In other words, control of radio wave transmission based on both time-division and frequency-division methods may be introduced.

For example, in the example shown in FIG. 8, the first group may be configured to transmit radio waves in a first frequency band, and the second group may be configured to transmit radio waves in a second frequency band.

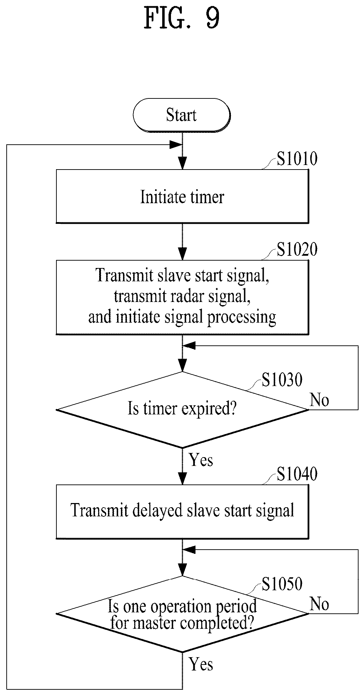

FIG. 9 illustrates a flowchart of a method for controlling a radio wave transmission timing at a master sensor according to the present disclosure. The method shown in FIG. 9 is performed by the master sensor, and hereinafter, it will be described as being performed by a "master sensor device."

The master sensor device may initiate a timer (S1010). The length of the timer may be, for example, T/2, where T represents the operation period for the master sensor device. Additionally, as described above, the master sensor device may know a time point at which the timer should be initiated, that is, the start or end time of the operation period. Alternatively, the master sensor device may be provided with the time point from a separate device or server.

As the timer is initiated, the master sensor device may be configured to transmit a slave start signal (i.e., control signal) to a slave sensor device (S1020). Accordingly, the slave sensor device may be configured to emit a radar signal (i.e., radio wave) through the radar sensor thereof and initiate a signal processing process for the corresponding reflected radio wave. Additionally, the master sensor device may control the radar sensor thereof to emit a radar signal and initiate a signal processing process for the corresponding reflected radio wave (S1020). Here, the master sensor device and the slave sensor device are sensor devices belonging to the same group, and the master sensor device and the slave sensor device are configured such that the FOVs of transmitted radar signals do not overlap.

The master sensor device checks whether the timer expires (S1030), which may be performed simultaneously with the signal processing process.

As the timer expires, the master sensor device may be configured to transmit a delayed slave start signal (i.e., control signal) to a delayed slave sensor device (S1040).
Accordingly, the delayed slave sensor device may be configured to emit a radar signal through the radar sensor thereof and initiate a signal processing process for the corresponding reflected radio wave. However, the master sensor device does not perform any investigation or diagnosis regarding whether the delayed slave sensor device properly performs the signal processing process or whether the signal processing process is delayed.

The master sensor device may be configured to check whether one operation period therefor is completed (ended) (S1050). Even if the signal processing process of the master sensor device is completed, the master sensor device does not initiate the timer (S1010) unless the operation period is ended. If the signal processing process of the master sensor device is completed, the master sensor device may remain in the standby mode until the operation period ends.

According to this method, the master sensor device and the slave sensor device of a first group and the delayed slave sensor device of a second group may transmit radio waves at different timings, ideally with a time difference of T/2. Thus, interference between radar sensors may be avoided without a separate radio wave interference cancellation circuit or restrictions on the frequency bands of radio waves.

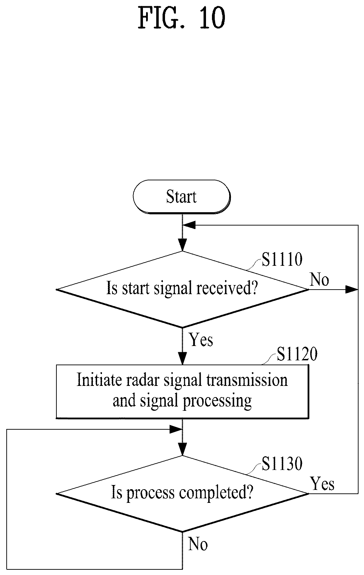

FIG. 10 illustrates a flowchart of a method for controlling a radio wave transmission timing at a slave sensor according to the present disclosure. The method shown in FIG. 10 is performed by a slave sensor, and hereinafter, it will be described as being performed by a "slave sensor device." The "slave sensor device" may be a slave sensor device belonging to the same group as a master sensor device. Alternatively, the "slave sensor device" may be a delayed slave sensor device belonging to a different group from the master sensor device.

The slave sensor device may check whether a start signal (i.e., control signal) is received from the master sensor device (S1110). Until the control signal is received, the slave sensor device may remain in the standby mode.

Unlike the master sensor device, the slave sensor device may not know the operation period of the master sensor device or the start and end time thereof. In addition, no operation period is configured for the slave sensor device.

When the start signal is received, the slave sensor device may be configured to emit a radar signal through the radar sensor thereof and initiate a signal processing process for the corresponding reflected radio wave (S1120).

The slave sensor device may be configured to check whether the signal processing process thereof is completed (S1130). Until the signal processing process is completed, the slave sensor device may perform radar signal transmission and signal processing. Once the signal processing process is completed, the slave sensor device enters the standby mode and checks whether the start signal is received from the master sensor device (S1110).

From the perspective of the slave sensor device, control may be performed to mitigate the timing misalignment of the "radar signal process" between the master sensor device and the slave sensor device illustrated in FIG. 5.

The slave sensor device may check whether the radar sensor thereof starts radio wave transmission within a predefined time after receiving the start signal (i.e., control signal) from the master sensor device. If the radio wave transmission does not start within the predefined time after receiving the start signal, the slave sensor device may be configured to skip the radio wave transmission corresponding to the received start signal. Accordingly, if a delay occurs in the slave sensor device, the "radar signal process" of the slave sensor device may not be initiated at all. That is, although sensing by the slave sensor device may be partially omitted, timing synchronization or alignment with the master sensor device may be maintained in a state close to ideal.

After the radio wave transmission is skipped, the slave sensor device returns to the standby mode. However, the predefined time may be determined as (T/2 - maximum radio wave transmission time).

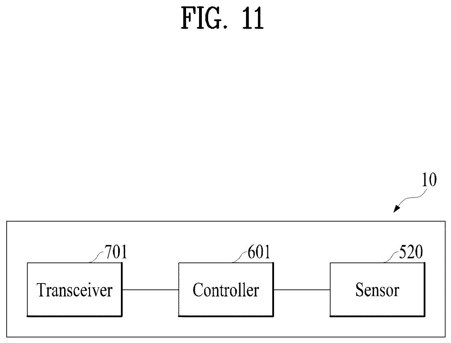

FIG. 11 illustrates a block diagram of a radio wave transmission device according to the present disclosure.

A radio wave transmission device 10 may be any one of the above-described master sensor device, slave sensor device, or delayed slave sensor device

First, a master sensor device 10 will be described.

The master sensor device 10 may include a controller 601 configured to generate a radio wave transmission start control signal based on the radio wave transmission timings of radar sensors of each sensor device and process reflected radio waves corresponding to transmitted radio waves. The radio wave transmission start control signal may be configured to instruct at least one sensor device of a first group or at least one sensor device of a second group to transmit a radio wave through the radar sensor thereof and process a reflected radio wave corresponding to the transmitted radio wave.

The FOVs of radio waves transmitted by the at least one sensor device of the first group are configured such that the FOVs do not overlap with each other, and the FOVs of radio waves transmitted by the at least one sensor device of the second group are also configured such that the FOVs do not overlap with each other. In other words, sensor devices with non-overlapping FOVs may be grouped together into the same group.

In addition, the master sensor device 10 may include a transceiver 701 configured to transmit the generated control signal to other sensor devices.

The controller 601 may be configured to transmit the radio wave transmission start control signal to the at least one sensor device of the first group and the at least one sensor device of the second group at different timings.

The controller 601 may be configured to transmit the radio wave transmission start control signal to the at least one sensor device of the first group when a timer is initiated. In addition, the controller 601 may be configured to transmit the radio wave transmission start control signal to the at least one sensor device of the second group when the timer expires.

The controller 601 may be configured to initiate the expired timer and transmit the radio wave transmission start control signal to the at least one sensor device of the first group as the operation period for the master sensor device ends.

The controller 601 may be configured not to initiate the expired timer or transmit the radio wave transmission start control signal to the at least one sensor device of the first group, even if transmission of a radio wave by the radar sensor of the master sensor device and processing of a corresponding reflected radio wave are completed before the operation period for the master sensor device ends.

The operation period for the master sensor device may be configured to have a length obtained by adding a predefined margin time to an expected time required for the transmission of the radio wave by the radar sensor of the master sensor device and the processing of the corresponding reflected radio wave. Thus, the master sensor device may remain in the standby mode during an idle time after completing the transmission of the radio wave and the processing of the corresponding reflected radio wave. This may resolve "timing misalignment" with other sensor devices such as the slave sensor device or the delayed slave sensor device.

Additionally, the master sensor device 10 may further include a radar sensor 520 configured to transmit radio waves or detect reflected radio waves corresponding to the transmitted radio waves.

A slave sensor device (or delayed slave sensor device) 10 will be described. The slave sensor device and the delayed slave sensor device have the same basic configuration. The only differences are whether the slave sensor device and the delayed slave sensor device belong to the same group as the master device, that is, whether the radio wave transmission timing is the same or different, or whether the FOVs of radio waves overlap. Accordingly, the "slave sensor device 10" will be described, which may conceptually include the delayed slave sensor device.

The slave sensor device 10 may include a controller 601 configured to control transmission of a radio wave by a radar sensor based on a radio wave transmission start control signal received from a master sensor device and process the reflected radio waves corresponding to the transmitted radio waves, based on a radio wave transmission start control signal received from the master sensor device. The radio wave transmission start control signal may be transmitted and received according to the radio wave transmission timing of the radar sensor.

The slave sensor device 10 may include a transceiver 701 configured to receive the radio wave transmission start control signal.

The controller 601 may control the slave sensor device to remain in the standby mode until the radio wave transmission start control signal is received.

The controller 601 may be configured to restrict the transmission of radio waves by the radar sensor if the radio wave transmission start control signal is received from the master sensor device while the processing of the reflected radio wave corresponding to the previously transmitted radio wave is not completed.

Additionally, the controller 601 may control radio wave transmission corresponding to the received radio wave transmission start control signal to be skipped if the transmission of the radio wave by the radar sensor does not start within a predefined time after the radio wave transmission start control signal is received.

Additionally, the slave sensor device 10 may further include a radar sensor 520 configured to transmit radio waves or detect reflected radio waves corresponding to the transmitted radio waves.

Meanwhile, the present disclosure may be implemented as a radar sensor system including the master sensor device and the slave or delayed slave sensor device. The radar sensor system according to the present disclosure may include the previously described master sensor device, slave sensor device, or delayed slave sensor device. The details thereof are incorporated herein by reference from the foregoing description.

The content of the present disclosure described in FIGS. 1 to 10, which has not been described with reference to FIG. 11, may be applied to the master sensor device 10, the slave sensor device 10, or the delayed slave sensor device 10, the controllers thereof 601, the radar sensor system including the same.

As another embodiment of the present disclosure, a moving object or vehicle 1000 including the above-described sensor device 10 or radar sensor system is provided.

In the above description, the "device" for controlling the transmission timing of radar signals and each component included therein have been described as performing control. However, the terms "device" and the components included therein are merely labels, and the scope of the present disclosure is not limited thereto.

That is, the proposed technology may be implemented under names other than device, processor, or controller. Moreover, the above-described methods for controlling the transmission timing of radar signals or processing the reflected 0signals corresponding to the transmitted radar signals may be performed by software, a computer, or other machines or devices through readable code.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

## Claims

1. A master sensor configured to control radar wave transmission, the master sensor comprising:
a controller configured to generate a control signal for a radio wave transmission start based on radio wave transmission timings of radar sensors of each sensor and process reflected radio waves corresponding to transmitted radio waves; and
a transceiver configured to transmit the control signal to other sensors,
wherein the controller is configured to transmit the control signal to at least one sensor of a first group and at least one sensor of a second group at different timings.

2. The master sensor of claim 1, wherein the controller is configured to:
transmit the control signal to the at least one sensor of the first group upon an initiation of a timer; and
transmit the control signal to the at least one sensor of the second group based on an expiration of the timer.

3. The master sensor of claim 1 or 2, wherein based on that an operation period for the master sensor ends, the controller is configured to initiate an expired timer and transmit the control signal to the at least one sensor of the first group.

4. The master sensor of claim 3, wherein even based on that a radar sensor of the master sensor has transmitted a radio wave and processing of a reflected radio wave corresponding to the transmitted radio wave has been completed before the operation period ends, the controller is configured not to initiate the expired timer or transmit the control signal to the at least one sensor of the first group.

5. The master sensor of claim 3 or 4, wherein the operation period is configured to have a length obtained by adding a predefined margin time to an expected time required for transmission of the radio wave by a radar sensor of the master sensor and processing of a reflected radio wave corresponding to the transmitted radio wave.

6. The master sensor of any one of claims 1 to 5, wherein the control signal is configured to instruct the at least one sensor of the first group or the at least one sensor of the second group to transmit radio waves through radar sensors and process reflected radio waves corresponding to the transmitted radio waves.

7. The master sensor of any one of claims 1 to 6, wherein fields of view (FOVs) of radio waves transmitted by the at least one sensor of the first group is configured not to overlap with each another, and
wherein FOVs of radio waves transmitted by the at least one sensor of the second group is configured not to overlap with each other.

8. A slave sensor configured to control radar wave transmission, the slave sensor comprising:
a controller configured to control transmission of a radio wave by a radar sensor based on a radio wave transmission start control signal received from a master sensor and process a reflected radio wave corresponding to the transmitted radio wave, wherein the control signal is transmitted and received based on a radio wave transmission timing of the radar sensor; and
a transceiver configured to receive the radio wave transmission start control signal,
wherein the controller is configured to control the slave sensor to remain in a standby mode until the control signal is received.

9. The slave sensor of claim 8, wherein based on that the control signal is received from the master sensor while processing of a reflected radio wave corresponding to a previously transmitted radio wave is not completed, the controller is configured to restrict the transmission of the radio wave by the radar sensor.

10. The slave sensor of claim 8 or 9, wherein based on that the transmission of the radio wave by the radar sensor does not start within a predefined time after the control signal is received, the controller is configured to skip the transmission of the radio wave corresponding to the received control signal.

11. A radar sensor system configured to perform radar wave transmission based on time-division multiplexing, the radar sensor system comprising:
a master sensor;
at least one sensor of a first group; and
at least one sensor of a second group,
wherein the master sensor is configured to generate a radio wave transmission start control signal based on radio wave transmission timings of radar sensors of each of the sensors and transmit the control signal to the at least one sensor of the first group or the at least one sensor of the second group,
wherein the master sensor is configured to transmit the control signal to the at least one sensor of the first group and the at least one sensor of the second group at different timings,
wherein the master sensor is configured to start transmitting radio waves simultaneously with the transmission of the control signal, and
wherein the at least one sensor of the first group and the at least one sensor of the second group are configured to start transmitting radio waves upon receiving the control signal.
